# EUROPÄISCHE PATENTSCHRIFT

(11) **EP 3 104 808 B1**
(45) Veröffentlichungstag und Bekanntmachung des Hinweises auf die Patenterteilung: **17.10.2018**
(21) Anmeldenummer: 15703783.9
(22) Anmeldetag: 11.02.2015
(51) Int. Cl.: A61D 19/02

(54) **VORRICHTUNG ZUR KEIMARMEN SAMENGEWINNUNG VON EBERN**
DEVICE FOR LOW-MICROBIAL COLLECTION OF SEMEN FROM BOARS
DISPOSITIF DE COLLECTE ASEPTIQUE DE SPERME DE VERRAT

(30) Priorität: 12.02.2014 DE 102014202522
(43) Veröffentlichungstag der Anmeldung: 21.12.2016
(73) Patentinhaber: Neidhardt, Stephanie, 26121 Oldenburg (DE)
(72) Erfinder: RATH, Detlef, 31535 Neustadt (DE)
(74) Vertreter: Taruttis, Stefan Georg
(86) Internationale Anmeldenummer: PCT/EP2015/052902
(87) Internationale Veröffentlichungsnummer: WO 2015/121321

(56) Entgegenhaltungen:
- US-A- 899 251
- US-A- 5 961 503
- US-A1- 2014 039 431

## Beschreibung

Die vorliegende Erfindung betrifft eine Vorrichtung und ein Verfahren zur Gewinnung von Samen vom Eber. Die Vorrichtung zeichnet sich dadurch aus, dass sie einen einfachen und damit kostengünstig herzustellenden Aufbau hat und beim Verfahren Verunreinigungen, insbesondere die Keimbelastung reduziert. Entsprechend zeichnet sich das Verfahren, das unter Verwendung der Vorrichtung durchgeführt wird, durch eine einfache Handhabung der Vorrichtung und die Gewinnung des Samens mit geringer Verunreinigung, insbesondere geringer Keimbelastung aus.

Die US2002/0133090 A1 und die US 899,251 A beschreiben zur Gewinnung von Ejakulat in der Tierzucht elastische Hüllen zur vaginalen Anordnung, die von elastischem Material aufgehalten werden.

Es ist bekannt, Eber auf ein Phantom steigen zu lassen, in dem eine künstliche Vagina angebracht ist. Dieses Verfahren hat den Vorteil, den Eintrag von Verunreinigungen in die gewonnene Samenprobe zu verringern und den Nachteil der zusätzlichen Handhabung der künstlichen Vagina.

Die US 2014/0039431 A1 beschreibt zur Samengewinnung vom Eber einen elastischen Streifen, an dessen Längsseite eine Tüte angebracht sein, kann. Der Streifen, der rückseitig an einen Handschuh geheftet werden kann, wird beim Verfahren U-förmig zusammengefaltet.

Die US 5,961,503 A beschreibt zur Samengewinnung mittels Handmethode vom Eber einen Behälter, der einen oberen und einen unteren Teil aufweist, zwischen denen ein Filter und eine Sollreißstelle angeordnet sind, so dass der Filter mit zurückgehaltenem Material mit dem oberen Teil vom unteren Teil abgetrennt werden kann.

Bei der herkömmlichen Handmethode zur Samengewinnung wird bei einem Eber mit einer behandschuhten Hand Druck auf die Penisspitze ausgeübt und das Ejakulat mit einem Behälter, der eine Trichteröffnung hat, aufgefangen. Die herkömmliche Handmethode hat den Nachteil, Verunreinigungen des Ejakulats zu fördern, z.B. durch Staub und Verunreinigungen von der Haut des Ebers.

Der Erfindung stellt sich die Aufgabe, eine einfach handzuhabende und preisgünstig herzustellende Vorrichtung zur Gewinnung von Samen vom Eber und ein damit durchführbares Verfahren bereitzustellen, das zu einer geringen Verunreinigung bzw. Keimbelastung des Samens führt.

Die Erfindung löst die Aufgabe mit den Merkmalen von Anspruch 1 und insbesondere mit einer Vorrichtung, die
- eine Handhülle zur Aufnahme einer Hand, z.B. einen Folienbeutel, bevorzugt mit zumindest einer Führung für einen Daumen, insbesondere in Form eines Handschuhs,
- einen Folienschlauch, der auf einer Seite der Handhülle, bevorzugt in einem Winkel von 30° bis 90° zur Längsachse der Handhülle befestigt ist, dessen erstes Ende eine Öffnung, die von einem Federelement aufgespannt wird, im Bereich der Handhülle aufweist und das dem ersten Ende gegenüberliegende zweite Ende des Folienschlauchs verschlossen ist,
- wobei der Folienschlauch zwischen einem Abschnitt der Handhülle zur Aufnahme von Fingern und einem angrenzenden Abschnitt zur Aufnahme eines Daumens angeordnet ist,
- wobei der Folienschlauch im Bereich seiner Öffnung in einer ersten Befestigung mit der Handhülle verbunden, optional zusätzlich in einer beabstandeten zweiten Befestigung,
- wobei der Folienschlauch im Bereich des Federelements mit der Handhülle verbunden ist und optional zusätzlich das Federelement direkt mit der Handhülle verbunden ist,
- wobei sich optional das Federelement zumindest über 30%, bevorzugter zumindest 50%, bevorzugter zumindest 100% der Länge des Abschnitts des Folienschlauchs erstreckt, der an der Handhülle anliegt oder an dieser befestigt ist,
- wobei bevorzugt der Folienschlauch zumindest in einer zweiten Befestigung an der Handhülle befestigt ist, die um die Breite einer Hand, z.B. 7 bis 12 cm, von der Öffnung beabstandet ist und weiter bevorzugt der Folienschlauch durchgehend über eine Länge, die der Breite einer Hand entspricht, z.B. 7 bis 12 cm an der Handhülle befestigt ist,
- optional eine Siebeinrichtung, die zwischen dem ersten Ende und dem zweiten Ende den Querschnitt des Folienschlauchs überspannt,
- optional eine Sollreißstelle, die zwischen dem ersten Ende und dem zweiten Ende, bevorzugt zwischen einer Siebeinrichtung und dem zweiten Ende angebracht ist und ein manuelles Abreißen des zweiten Abschnitts des Folienschlauchs erlaubt, der sich zwischen der Sollreißstelle und dem zweiten Ende erstreckt,
- optional ein elektronisch und/oder optisch beschreibbares Etikett auf dem Folienschlauch, das bevorzugt zwischen der Handhülle und dem zweiten Ende, bevorzugter zwischen der Sollreißstelle und dem zweiten Ende angebracht ist und
- optional ein zweites Federelement, das den Folienschlauch in einem Abstand zur Öffnung, z.B. um die Breite einer Hand, z.B. 7 bis 12 cm, aufspannt und weiter bevorzugt mit der Handhülle verbunden ist,
aufweist oder daraus besteht.

Die Handhülle kann aus Kunststofffolie bestehen, z.B. Polyethylen, Polypropylen und/oder Polyvinyl oder Latex. Der Folienschlauch kann unabhängig vom Material der Handhülle aus Kunststofffolie bestehen, z.B. Polyethylen, Polypropylen und/oder Polyvinyl, weniger bevorzugt Latex. Handhülle und Folienschlauch können optional zwei aufeinander entlang Nähten, z.B. Schweißnähten, befestigten Folien, je eine Folie, die entlang einer Naht geschlossen ist, oder eine mit Ausnahme der Öffnung im Folienschlauch und einer Öffnung der Handhülle umfänglich nahtlos geschlossene Folie aufweisen. Für das Verbinden durch Schweißen sind die zu verschweißenden Teile Handhülle, Folienschlauch und/oder Federelement aus thermoplastischem Kunststoff.

Der Folienschlauch kann dadurch an der Handhülle befestigt sein, dass ein Wandabschnitt des Folienschlauchs mit einem Wandabschnitt der Handhülle verklebt und/oder verschweißt ist. Optional kann die Handhülle aus demselben Material bestehen wie der Folienschlauch.

Federelemente können als Verstärkung des Folienschlauchs ausgebildet sein, z.B. kann das Federelement am ersten Ende des Folienschlauchs als umgeschlagener und fixierter, z.B. verschweißter Abschnitt des Folienschlauchs und/oder der Handhülle ausgebildet sein, optional mit einem darin angeordneten elastischen Element. Federelemente können auf der Innenseite oder bevorzugt auf der Außenseite des Folienschlauchs angeordnet sein, z.B. angeschweißt oder angeklebt sein, optional in einem auf sich selbst geschobenen Abschnitt des Folienschlauchs.

Federelemente können im unbelasteten Zustand einen runden bis ovalen Querschnitt aufspannen und optional als offener oder geschlossener Ring und/oder Spirale ausgebildet sein, die sich längs des Folienschlauchs erstreckt. Das Federelement besteht bevorzugt aus Kunststoff.

Der Abschnitt des Folienschlauchs, der an dessen zweiten Ende angeordnet ist, kann eine verschlossene Tülle aufweisen, bevorzugt endständig angeordnet. Eine solche Tülle, insbesondere aus Kunststoff, die bevorzugt einstückig mit dem endständigen zweiten Abschnitt des Folienschlauchs ausgebildet ist, kann im Verfahren durch Aufschneiden auf einfache Weise geöffnet werden, um das erhaltene Ejakulat aus dem Folienschlauch auszugießen.

Der am zweiten Ende des Folienschlauchs angeordnete zweite Abschnitt kann aus einem anderen Material als der angrenzende Folienschlauch bestehen und/oder eine andere Wandstärke aufweisen, optional in Form eines Bechers oder einer Flasche ausgebildet sein. Dieser endständige Abschnitt ist dicht mit dem angrenzenden Folienschlauch verbunden, z.B. angeschweißt, angeklebt oder einstückig mit diesem ausgebildet.

Der Folienschlauch ist bevorzugt zumindest in dem zweiten Abschnitt, der das zweite Ende bildet, doppelwandig und weist einen Einlass für ein Temperiermedium auf, der bevorzugt mit einem Ventil verschließbar ist. Als Temperiermedium kann im Verfahren Wasser verwendet werden. Der doppelwandige zweite Abschnitt zur Temperierung ist bevorzugt, da die Fruchtbarkeit der Spermien im unverdünnten Ejakulat bei Temperaturen unterhalb der Körpertemperatur abnehmen kann. Der Folienschlauch kann dadurch in seinem endständigen Abschnitt doppelwandig ausgebildet sein, dass der am zweiten Ende angeordnete Abschnitt ein doppelwandiges Gefäß ist, das dicht am Folienschlauch angeschlossen ist. Ein solches Gefäß kann aus doppelwandiger Folie gebildet sein, deren innere und/oder äußere Folie elastisch oder starr sein kann, z.B. unabhängig voneinander mit einer Wandstärke von 0,1 bis 1,5 mm, z.B. aus Polypropylen oder Polyethylen.

Die Handhülle weist insgesamt eine gestreckte Form auf, die zur Aufnahme einer Hand geeignet ist, z.B. rechteckig bis oval, bevorzugt mit einer Führung für einen Daumen, bevorzugt zwei nebeneinander in einem Abstand angeordnete Führungen für Daumen, so dass eine rechte oder linke Hand in der Handhülle angeordnet werden kann und jeweils eine Führung für den Daumen bereitgestellt wird. Bevorzugt weist die Handhülle zwei bis vier Führungen für Finger auf. Führungen für Daumen bzw. Finger können durch Verbinden von Abschnitten der Handhülle erzeugt sein, z.B. in Form von Schweiß- oder Klebenähten, die die Führungen voneinander abtrennen. Die Handhülle kann aus zwei entlang der Kanten verbundenen Folien oder einem Folienschlauch bestehen und ist nur an einem Ende offen, durch das die Hand eingeführt werden kann. Bevorzugt hat die Handhülle die Form eines Handschuhs.

Der Folienschlauch ist mit der Handhülle im Bereich zwischen deren Fingerabschnitt, der zur Aufnahme von Fingern dient und deren Daumenabschnitt, der zur Aufnahme des Daumens einer Hand dient, angebracht, so dass sich die Handhülle mit ihrem Fingerabschnitt und ihrem Daumenabschnitt um gegenüberliegende Bereiche des Folienschlauchs anordnet, bzw. der Folienschlauch bei Einführen einer Hand in die Handhülle von dieser umfasst wird. Entsprechend ist der Folienschlauch in einem Winkel von ca. 45° bis 90° zum Fingerabschnitt und/oder Daumenabschnitt angeordnet.

Bevorzugt weist der Folienschlauch eine Siebeinrichtung auf, die zwischen dem ersten Ende und dem zweiten Ende den Querschnitt des Folienschlauchs überspannt. Die Siebeinrichtung dient zur Zurückhaltung des Bulbourethraldrüsensekrets. Die Siebeinrichtung kann aus zumindest einer Lage eines Siebgewebes bestehen, z.B. Gaze. Die Siebeinrichtung ist bevorzugt mit der Innenwand des Folienschlauchs verbunden, z.B. umfänglich mit dem Folienschlauch verschweißt oder verklebt. Da das Bulbourethraldrüsensekret von dem spermienhaltigen Ejakulat abgetrennt werden soll, ist bevorzugt eine Sollreißstelle des Folienschlauchs zwischen der Siebeinrichtung und dem zweiten Ende angeordnet, z.B. in einem Abstand von 2 bis 10 cm von der Siebeinrichtung. Die Sollreißstelle kann z.B. eine umlaufende Schwächung des Folienschlauchs sein, z.B. eine Perforation, die die Wandstärke des Folienschlauchs unvollständig durchquert.

Der Folienschlauch weist bevorzugt an seinem zweiten Abschnitt, der an seinem zweiten Ende angeordnet ist, ein Etikett auf, das elektronisch und/oder optisch sichtbar beschreibbar ist, z.B. einen elektronisch beschreibbaren Transponder und/oder ein Etikett für einen oder mit einem optisch lesbarem Code und/oder eine lesbare Beschriftung.

Der Folienschlauch weist an seinem ersten Ende ein Federelement auf, das seine Öffnung aufspannt und bevorzugt ein von der Öffnung beabstandetes zweites Federelement, das den Folienschlauch offen hält, um den Querschnitt des Folienschlauchs zumindest über der Handhülle für den Durchtritt des Ejakulats offen zu halten. Erstes und zweites Federelement können einstückig ausgebildet sein. Bevorzugt erstreckt sich das Federelement zumindest zu 30%, bevorzugter zu zumindest 50%, weiter bevorzugt zu 90 bis 100% über die Länge des Folienschlauchs von der ersten Befestigung über die Handhülle. Bei einer zweiten Befestigung erstreckt sich das Federelement bevorzugt zwischen der ersten und der zweiten Befestigung an der Handhülle.

Die erste und zweite Befestigung des Folienschlauchs an der Handhülle können z.B. in einem Abstand angeordnet sein, der der Breite eine Hand entspricht, z.B. 7 bis 12 cm, bevorzugt ist der Folienschlauch durchgängig von der ersten bis zur zweiten Befestigung mit der Handhülle verbunden.

Die Erfindung wird nun genauer an Hand von Beispielen und mit Bezug auf die Figuren beschrieben, die schematisch in
- Figur 1 eine einfache Ausführungsform der Vorrichtung in Aufsicht,
- Figur 2 eine einfache Ausführungsform der Vorrichtung um 90° zu Figur 1 gedreht,
- Figur 3 eine bevorzugte Ausführungsform der Vorrichtung,
- Figur 4 eine weitere bevorzugte Ausführungsform der Vorrichtung,
- Figur 5 ein am Folienschlauch angeordnetes Federelement und
- Figur 6 abschnittsweise das geschlossene zweite Ende der Vorrichtung
zeigen.

In den Figuren bezeichnen gleiche Bezugsziffern funktionsgleiche Elemente. Einzelne in den Figuren gezeigte Elemente können mit anderen Ausführungsformen kombiniert werden.

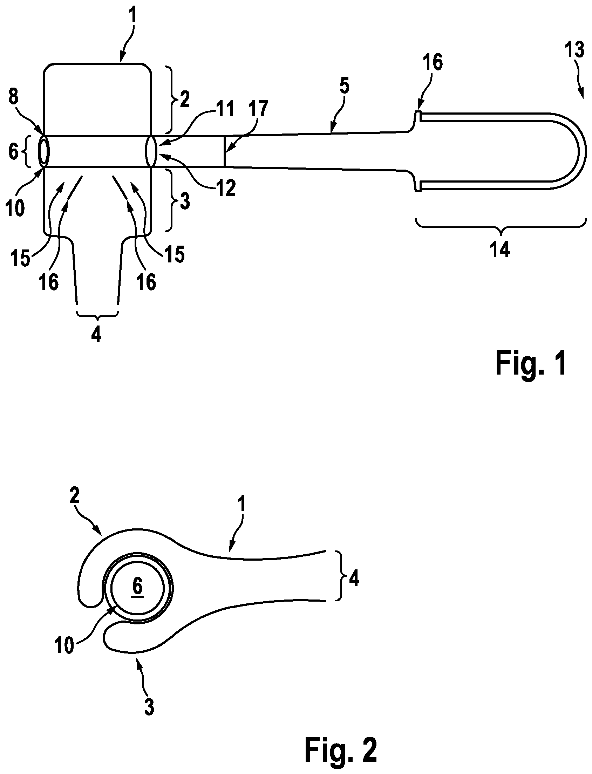

Figur 1 zeigt eine Handhülle 1 aus Kunststofffolie, die im flachen Zustand etwa rechteckig ist, mit einem etwa rechteckigen Fingerabschnitt 2 und einem daran anschließenden Daumenabschnitt 3, der ebenfalls rechteckig ist. Die Handhülle 1 ist bis auf eine Handöffnung 4, durch die eine Hand eingeführt werden kann, umfänglich geschlossen. Diese Ausführung zeigt eine einfache Handhülle ohne Führungen für Finger. Eine Daumenführung 15 kann z.B. mittels einer Schweißnaht 16 gebildet werden.

Im Bereich zwischen Fingerabschnitt 2 und Daumenabschnitt 3 ist ein Folienschlauch 5 mit der Handhülle 1 verbunden, insbesondere an der Öffnung 6 am ersten Ende 7 des Folienschlauchs 5 mittels einer ersten Befestigung 8, sowie entsprechend der bevorzugten Ausführungsform an einer zweiten Befestigung 9, die in einem Abstand entsprechend einer Handbreite von der ersten Befestigung 8 angeordnet ist. Die Öffnung 6 weist ein ringförmiges Federelement 10 auf, das die Öffnung 6 aufspannt und aus dem umgeschlagenen und zur Fixierung zumindest abschnittsweise umfänglich verschweißten Ende des Folienschlauchs 5 besteht. Das Federelement 10 bildet auch eine Verstärkung des Rands der Öffnung 6. Der Folienschlauch 5 ist zusätzlich zur ersten Befestigung 8 mittels einer zweiten Befestigung 9 mit der Handhülle 1 verbunden, wobei der Folienschlauch 5 im Bereich der zweiten Befestigung 9 ein zweites Federelement 12 aufweist, das den Querschnitt des Folienschlauchs 5 an seiner Öffnung 6 aufspannt. Das zweite Federelement 12 kann ein zusammengeschobener und zumindest abschnittsweise verbundener, insbesondere verschweißter Abschnitt des Folienschlauchs 5 sein. Alternativ kann das erste Federelement 10 und/oder das zweite Federelement 12 ein elastisches Element 11 aufweisen oder daraus bestehen, das z.B. ein offener oder geschlossener Ring ist, der innen im Folienschlauch 5, bevorzugt außen auf dem Folienschlauch 5 befestigt ist.

Der Folienschlauch 5 ist an seinem dem ersten Ende 7 gegenüberliegenden zweiten Ende 13 geschlossen und ist in dem zweiten Abschnitt 14 am zweiten Ende 13 doppelwandig. Gezeigt ist, dass der endständige zweite Abschnitt 14 als doppelwandiges Gefäß ausgebildet ist, dass dicht mit dem Folienschlauch 5 verbunden ist, z.B. verklebt oder verschweißt.

Eine Siebeinrichtung 23, die durch zumindest eine Lage eine porösen Gewebes bzw. ein Siebgewebe gebildet ist, ist in einem Abschnitt des Folienschlauchs 5 zwischen der Handhülle und dem zweiten Abschnitt 14 angeordnet. Die Siebeinrichtung 23 ist z.B. umfänglich mit dem Folienschlauch 5 verschweißt.

Figur 2 zeigt eine Aufsicht auf die Vorrichtung in dem Zustand, in dem eine Hand in der Handhülle 1 angeordnet ist. Der Fingerabschnitt 2 und der Daumenabschnitt 4 sind um den Folienschlauch 5 angeordnet, so dass der Folienschlauch 5 durch seine Befestigung mit der Handhülle 1 gehalten ist. Das Federelement 10, das die Öffnung 6 des Folienschlauchs 5 aufspannt, ist generell bevorzugt angrenzend an eine Fingerführung an der Handhülle 1 befestigt.

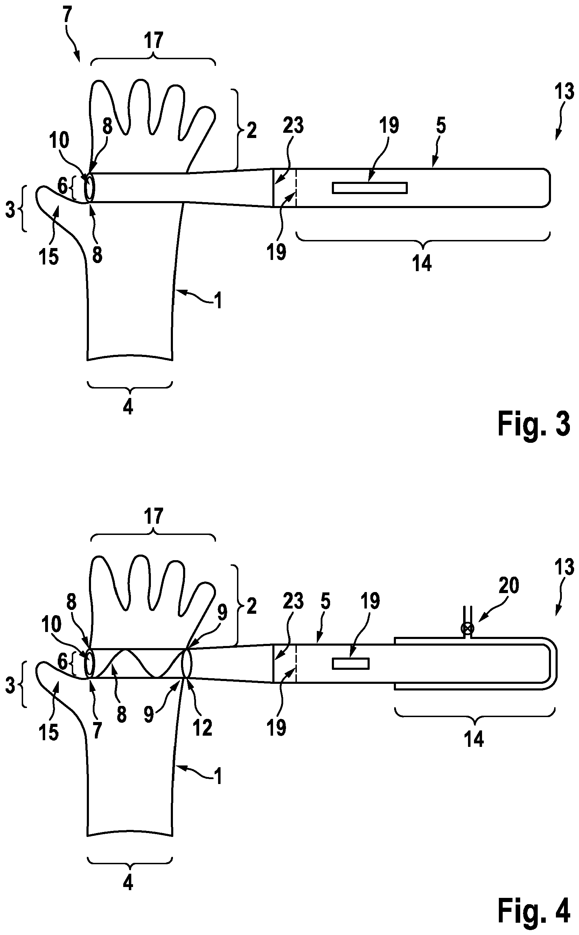

Figur 3 zeigt eine Vorrichtung mit bevorzugter Ausführungsform der Handhülle 1, die in ihrem Fingerabschnitt 2 die Fingerführungen 17 aufweist und in ihrem Daumenabschnitt 3 eine Daumenführung 15. Hier wird deutlich, dass bevorzugt der Folienschlauch 5 in einem Winkel von 45° bis ca. 90° zu den Fingerführungen 17 angeordnet ist. Die Öffnung 6 des Folienschlauchs 5 ist wie generell bevorzugt am Rand der Handhülle 1 befestigt, so dass die Daumenführung 15 im flachen Zustand der Handhülle, d.h. ohne in die Handhülle 5 eingeführte Hand, das erste Ende 7 des Folienschlauchs 5 überragt. Die Öffnung 6 des Folienschlauchs 5 weist ein Federelement 10 auf, das die Öffnung 6 aufspannt. Der Folienschlauch 5 ist mittels einer ersten Befestigung 8 im Bereich des Federelements 10 mit der Handhülle 1 an einer Kante verbunden, die eine Außenkante einer Fingerführung 17 ist, die von der Daumenführung 15 überragt wird.

Der Folienschlauch 5 ist entlang des zweiten Abschnitts 14 aus einer Lage einer Folie gebildet und am zweiten Ende verschlossen. Zwischen der Siebeinrichtung 23 und dem zweiten Abschnitt 14 ist eine Sollreißstelle 18 angeordnet, z.B. in Form einer anteiligen Perforation, die die Dicke des Folienschlauchs 5 nicht vollständig durchdringt.

Ein Etikett 19 ist auf dem zweiten Abschnitt 14 angebracht.

Figur 4 zeigt eine Vorrichtung, bei der sich das Federelement 10 von der Öffnung 6, an der der Folienschlauch 5 mittels der ersten Befestigung 8 mit der Handhülle 1 verbunden ist, über den Bereich der Handhülle 1 bis zur zweiten Befestigung 9 erstreckt. Das Federelement 10 kann einstückig mit einem zweiten Federelement 12 ausgebildet sein, das an der zweiten Befestigung 9 angeordnet ist. Hier ist ein spiraliges Federelement 10 gezeigt, das im Bereich der Öffnung 6 ringförmig sein kann. Alternativ kann das Federelement 10 Rippen aufweisen, die sich längs des Folienschlauchs 5 erstrecken. Das zweite Federelement 12 kann ebenfalls ringförmig ausgebildet sein.

Der zweite Abschnitt 14 ist in der Ausführungsform von Figur 4 doppelwandig mit einem Stutzen 20 vesehen, der zur Einfüllung eines Temperiermediums, z.B. Wasser, vorgesehen ist und mit einem Ventil verschließbar ist. Das Ventil kann z.B. ein Folienventil sein, das sich nach Befüllen des Doppelmantels irreversibel schließt. Wie generell bevorzugt weist diese Ausführungsform eine Siebeinrichtung 23 und zwischen dieser und dem zweiten Abschnitt 14 eine Sollreißstelle 18 auf.

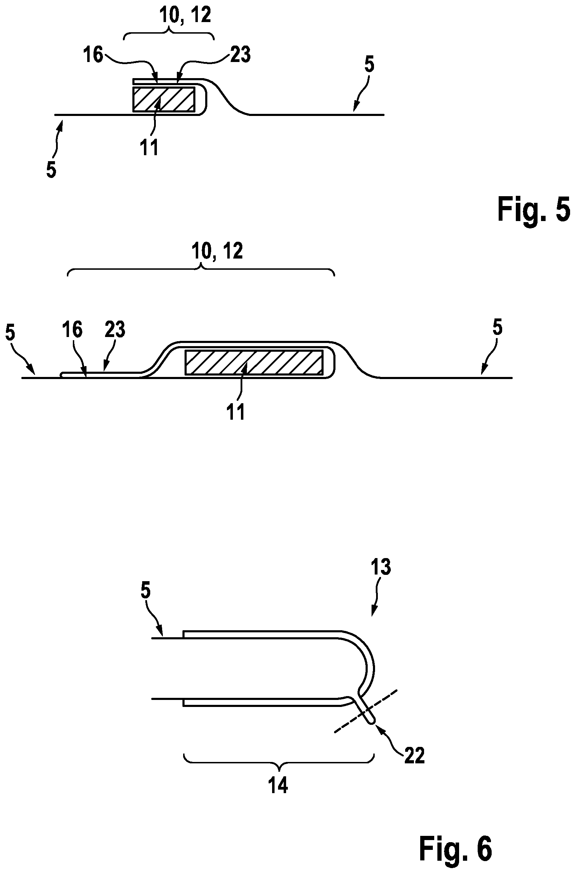

Figur 5 zeigt in einem Ausschnitt eine mögliche Ausbildung eines Federelements 10, 12 am Folienschlauch 5 dadurch, dass ein elastisches Element 11 auf der Außenseite des Folienschlauchs angeordnet ist und ein Abschnitt 21 des Folienschlauchs 5 über das elastische Element 11 zurückgelegt bzw. umgeschlagen ist. Dabei kann der zurückgelegte Abschnitt 21 des Folienschlauchs 5 zur Fixierung 24 mit einem Abschnitt des Folienschlauchs 5 verbunden sein, der an das elastische Element 11 angrenzt, und/oder mit dem elastischen Element 11 verbunden sein, z.B. durch Kleben oder Schweißen, bevorzugt mittels einer vollständig oder abschnittsweise um das Federelement 10, 12 umlaufenden Schweißnaht 16.

Das Federelement 10, das die Öffnung 6 des Folienschlauchs 5 aufspannt und/oder das zweite Federelement 12 kann auf diese Weise als umgeschlagener und fixierter Abschnitt 21 des Folienschlauchs 5, optional mit elastischem Element 11, ausgebildet sein. Generell ist bevorzugt, dass die erste und zweite Befestigung 8, 9 das Federelement 10 bzw. das zweite Federelement 12 mit dem Folienschlauch 5 verbindet.

Figur 6 zeigt einen Ausschnitt des zweiten Abschnitts 14 der Vorrichtung, der anteilig doppelwandig sein kann, mit einer verschlossenen Tülle 22. Die Tülle 22 kann zum Austretenlassen von Ejakulat aus dem zweiten Abschnitt 14 aufgeschnitten werden, wie durch die gestrichelte Linie angedeutet ist.

### Beispiel: Keimarme Samengewinnung vom Eber

Für das Verfahren zur Samengewinnung von Jungebern der Rasse Pietrain wurde eine Vorrichtung gemäß Figur 3 eingesetzt. Eber wurden auf ein Phantom aufsteigen gelassen. Ein Techniker hatte seine Hand in die handschuhförmige Handhülle 1 geschoben und umfasste mittels der Fingerführungen 17 und der Daumenführung 15 den Folienschlauch 5 in dem Bereich, der entlang der Handhülle 1 angebracht war. Die Öffnung 6, die vom Federelement 10 aufgespannt war, wurde über die Penisspitze des Ebers geführt und es wurde leichter Druck durch den Folienschlauch 5 auf die Penisspitze ausgeübt. Das Ejakulat lief durch den von dem zweiten Federelement 12 aufgespannten Folienschlauch 5 in dessen zweiten Abschnitt 14. Dabei war die andere Hand frei, so dass sich der Techniker, der neben dem Eber saß, festhalten bzw. abstützen konnte, oder die andere Hand konnte zum Halten des zweiten Abschnitts 14 verwendet werden. Anschließend wurde der Folienschlauch 5 vom Penis abgenommen. Das Bulbourethraldrüsensekret wurde von der Siebeinrichtung 23 zurückgehalten und der zweite Abschnitt 14 konnte durch Abreißen entlang der Sollreißstelle 18 vom Bulbourethraldrüsensekret abgetrennt werden. Das im zweiten Abschnitt 14 enthaltene Ejakulat wurde untersucht und nach Verdünnung zur Besamung eingesetzt.

Es hat sich gezeigt, dass die Vorrichtung eine einfache Handhabung erlaubt, die im Wesentlichen der herkömmlichen Handmethode entspricht und ein zeitaufwändiges Anschließen des Penis an einen Absamautomaten vermieden wird. Die Versuche zeigten, dass durchschnittliche Ejakulatvolumina von ca. 250-260 ml erhalten wurden, die Gesamtzahl an Spermien (gemessen mittels NucleoCounter SP-100 nach Permeabilisierung und Färbung mit Propidiumjodid bei 488 nm) je Ejakulat von ca. 98,8 Mrd. entsprachen denjenigen, die mit der herkömmlichen Handmethode erzielt wurden und lagen damit signifikant höher als diejenigen, die in einem Vergleichsversuch mit Absamautomaten (80 - 87 Mrd) erreicht wurden.

Die Gesamtkeimzahl (KbE) der Ejakulate wurde nach Inkubation in Flüssigkultur (Uricult, Orion Diagnostica, Finnland) für 48h bei 37°C bestimmt. Während bei der herkömmlichen Handmethode, die zum Vergleich durchgeführt wurde, ein Gesamt-Mittelwert von 2,9 x 10⁶ KbE/ml gefunden wurde, ergab das Verfahren mit der erfindungsgemäßen Vorrichtung einen Gesamt-Mittelwert von ca. 7 x 10⁵ KbE/ml.

### Bezugszeichenliste:

1 Handhülle
2 Fingerabschnitt
3 Daumenabschnitt
4 Handöffnung
5 Folienschlauch
6 Öffnung
7 erstes Ende
8 erste Befestigung
9 zweite Befestigung
10 Federelement
11 elastisches Element
12 zweites Federelement
13 zweites Ende
14 zweiter Abschnitt
15 Daumenführung
16 Schweißnaht
17 Fingerführung
18 Sollreißstelle
19 Etikett
20 Stutzen
21 zurückgelegter Abschnitt der Folienhülle 5
22 Tülle
23 Siebeinrichtung
24 Fixierung

## Patentansprüche

1. Vorrichtung zur Gewinnung von Ejakulat vom Eber, die eine Handhülle (1) mit einem Fingerabschnitt (2) und einem Daumenabschnitt (3) zur Aufnahme einer Hand, einen auf einer Seite der Handhülle (1) zwischen dem Fingerabschnitt (2) und dem Daumenabschnitt (3) befestigten Folienschlauch (5) aufweist, dessen erstes Ende (7) eine Öffnung (6) aufweist, und dessen dem ersten Ende (7) gegenüberliegendes zweites Ende (13) verschlossen ist, wobei der Folienschlauch (5) an seinem ersten Ende (7) mit der Handhülle (1) verbunden ist, **dadurch gekennzeichnet, dass** die Öffnung von einem Federelement (10) aufgespannt wird und das erste Ende (7) des Folienschlauchs (5) mit der Kante der Handhülle (1) verbunden ist, die sich zwischen dem Fingerabschnitt (2) und dem Daumenabschnitt (3) erstreckt.

2. Vorrichtung nach Anspruch 1, **dadurch gekennzeichnet, dass** das der Fingerabschnitt (2) Fingerführungen (17) aufweist und der Daumenabschnitt (3) eine Daumenführung (15).

3. Vorrichtung nach einem der voranstehenden Ansprüche, **dadurch gekennzeichnet, dass** der Folienschlauch (5) in einem Abstand zur Öffnung (6) ein zweites Federelement (12) aufweist und in diesem Bereich mit der Handhülle (1) verbunden ist.

4. Vorrichtung nach einem der voranstehenden Ansprüche, **dadurch gekennzeichnet, dass** das Federelement (10), das die Öffnung (6) des ersten Endes (7) aufspannt, und/oder das zweite Federelement (12) durch einen zurückgelegten und fixierten Abschnitt (21) des Folienschlauchs (5) und/oder ein elastisches Element (11) gebildet ist.

5. Vorrichtung nach einem der voranstehenden Ansprüche, **dadurch gekennzeichnet, dass** das Federelement (10), das die Öffnung (6) des ersten Endes (7) aufspannt, und/oder das zweite Federelement (12) direkt mit der Handhülle (1) verbunden ist.

6. Vorrichtung nach einem der voranstehenden Ansprüche, **dadurch gekennzeichnet, dass** das sich das Federelement (10), das die Öffnung (6) des ersten Endes (7) aufspannt, von der Öffnung (6) zumindest zu 30 % des Abschnitts, mit dem der Folienschlauch (5) an der Handhülle (1) anliegt, längs des Folienschlauchs (5) erstreckt.

7. Vorrichtung nach einem der voranstehenden Ansprüche, **dadurch gekennzeichnet, dass** der Folienschlauch (5) zwischen seinem ersten Ende (7) und zweiten Ende (13) eine Siebeinrichtung (23) aufweist, die den Querschnitt des Folienschlauchs (5) überspannt.

8. Vorrichtung nach einem der voranstehenden Ansprüche, **dadurch gekennzeichnet, dass** der Folienschlauch (5) zwischen seinem ersten Ende (7) und zweiten Ende (13) eine Sollreißstelle (18) aufweist.

9. Vorrichtung nach einem der voranstehenden Ansprüche, **dadurch gekennzeichnet, dass** der Folienschlauch (5) in seinem an das zweite Ende (13) angrenzenden zweiten Abschnitt (14) doppelwandig ist und einen Stutzen (20) zum Einfüllen eines Temperiermediums in den Doppelmantel aufweist.

10. Verfahren zur Gewinnung von Ejakulat vom Eber, **gekennzeichnet durch** das Einführen einer Hand in die Handhülle (1) einer Vorrichtung nach einem der voranstehenden Ansprüche und Anordnen der Öffnung (6) am ersten Ende (7) des Folienschlauchs (5) über die Penisspitze des Ebers.

11. Verfahren nach Anspruch 10, **gekennzeichnet durch** Einführen von Fingern in den Fingerabschnitt (2) und Einführen eines Daumens in den Daumenabschnitt (3), wobei die Öffnung (6) am ersten Ende (7) des Folienschlauchs (5) von dem Federelement (10) aufgespannt wird.

12. Verfahren nach einem der Ansprüche 10 bis 11, **dadurch gekennzeichnet, dass** der Folienschlauch (5) in seinem an das zweite Ende (13) angrenzenden zweiten Abschnitt (14) doppelwandig ist und durch einen Stutzen (20) ein Temperiermedium in diesen Doppelmantel eingefüllt wird.

## Claims

1. Device for collecting ejaculate from the boar, having a hand covering (1) with a finger section (2) and a thumb section (3) for accommodating a hand, a foil hose (5) attached to one side of the hand covering (1) between the finger section (2) and the thumb section (3), the first end (7) of which foil hose (5) having an opening (6) and the second end (13) of which opposite the first end (7) is closed, wherein the foil hose (5) at its first end (7) is connected to the hand covering (1), **characterized in that** the opening is spanned open by a spring element (10), and the first end (7) of the foil hose (5) is connected with the edge of the hand covering (1), which extends between the finger section (2) and the thumb section (3).

2. Device according to claim 1, **characterized in that** the finger section (2) has finger guides (17) and the thumb section (3) has a thumb guide (15).

3. Device according to one of the preceding claims, **characterized in that** the foil hose (5) has, at a spacing from the opening (6), a second spring element (12) and is connected in this area to the hand covering (1).

4. Device according to one of the preceding claims, **characterized in that** the spring element (10), which spans open the opening (6) of the first end (7), and/or the second spring element (12) is formed by a laid-back and fixed section (21) of the foil hose (5) and/or by an elastic element (11).

5. Device according to one of the preceding claims, **characterized in that** the spring element (10), which spans open the opening (6) of the first end (7), and/or the second spring element (12), is directly connected to the hand covering (1).

6. Device according to one of the preceding claims, **characterized in that** the spring element (10), which spans open the opening (6) of the first end (7), from the opening (6) extends longitudinally along the foil hose (5) at least to 30 % of the section, along which the foil hose (5) lies against the hand covering (1).

7. Device according to one of the preceding claims, **characterized in that** the foil hose (5) between its first end (7) and second end (13) has a screening device (23), which spans over the cross-section of the foil hose (5).

8. Device according to one of the preceding claims, **characterized in that** the foil hose (5) between its first end (7) and second end (13) has a predetermined tearing point (18).

9. Device according to one of the preceding claims, **characterized in that** the foil hose (5) is double-walled in its second section (14) adjacent to the second end (13) and has a socket (20) for filling a temperature control medium into the double shell.

10. Method for collecting ejaculate from the boar, **characterized by** inserting a hand into the hand covering (1) of a device according to one of the preceding claims and arranging the opening (6) at the first end (7) of the foil hose (5) over the tip of the penis of the boar.

11. Method according to claim 10, **characterized by** inserting fingers into the finger section (2) and inserting a thumb into the thumb section (3), wherein the opening (6) at the first end (7) of the foil hose (5) is spanned open by the spring element (10).

12. Method according to one of claims 10 to 11, **characterized in that** the foil hose (5) is double-walled in its second section (14) adjacent to the second end (13) and a temperature control medium is filled through a socket (20) into this double shell.

## Revendications

1. Dispositif d'obtention d'éjaculat du verrat, comprenant un manchon (1) muni d'une partie doigt (2) et d'une partie pouce (3) pour recevoir une main, un film tubulaire (5) fixé sur un côté du manchon (1) entre la partie doigt (2) et la partie pouce (3), dont la première extrémité (7) comporte une ouverture (6), et dont la seconde extrémité (13) opposée à la première extrémité (7) est fermée, le film tubulaire (5) étant relié au manchon (1) en sa première extrémité (7), **caractérisé en ce que** l'ouverture est tendue par un élément à ressort (10) et la première extrémité (7) du film tubulaire (5) avec le bord du manchon (1), manchon s'étendant entre la partie doigt (2) et la partie pouce (3).

2. Dispositif selon la revendication 1, **caractérisé en ce que** la partie doigt (2) comporte des guides de doigts (17) et la partie pouce (3) comporte un guide de pouce (15).

3. Dispositif selon l'une des revendications précédentes, **caractérisé en ce que** le film tubulaire (5) présente un second élément à ressort (12) à une certaine distance de l'ouverture (6) et est relié au manchon (1) dans cette zone.

4. Dispositif selon l'une des revendications précédentes, **caractérisé en ce que** l'élément à ressort (10), qui enjambe l'ouverture (6) de la première extrémité (7), et/ou le second élément à ressort (12) est constitué d'une partie traversée et fixe (21) du film tubulaire (5) et/ou d'un élément élastique (11).

5. Dispositif selon l'une des revendications précédentes, **caractérisé en ce que** l'élément à ressort (10), qui enjambe l'ouverture (6) de la première extrémité (7), et/ou le second élément à ressort (12) est relié directement au manchon (1).

6. Dispositif selon l'une des revendications précédentes, **caractérisé en ce que** l'élément de ressort (10) qui enjambe l'ouverture (6) de la première extrémité (7), s'étend à partir de l'ouverture (6) sur au moins 30% de la partie avec laquelle le film tubulaire (5) repose contre le manchon (1), le long du film tubulaire (5).

7. Dispositif selon l'une des revendications précédentes, **caractérisé en ce que** le film tubulaire (5) comporte un dispositif de tamisage (23) entre sa première extrémité (7) et sa seconde extrémité (13) qui enjambe la section transversale du film tubulaire (5).

8. Dispositif selon l'une des revendications précédentes, **caractérisé en ce que** le film tubulaire (5) présente un point de rupture de consigne (5) entre sa première extrémité (7) et sa seconde extrémité (13).

9. Dispositif selon l'une des revendications précédentes, **caractérisé en ce que** le film tubulaire (5) est à double paroi dans sa seconde section (14) adjacente à la seconde extrémité (13) et comporte une connexion (20) pour remplir un milieu de trempe dans la double enveloppe.

10. Procédé d'obtention d'éjaculat à partir du verrat, caractérisé en introduisant une main dans le manchon (1) d'un dispositif selon l'une quelconque des revendications précédentes et en disposant l'ouverture (6) à la première extrémité (7) du film tubulaire (5) sur l'extrémité du pénis du verrat.

11. Procédé selon la revendication 10, **caractérisé par** l'introduction des doigts dans la partie doigt (2) et l'introduction du pouce dans la partie pouce (3), dans lequel l'ouverture (6) est tendue au niveau de la première extrémité (7) du film tubulaire (10).

12. Procédé selon l'une des revendications 10 ou 11, **caractérisé en ce que** le film tubulaire (5) est à double paroi dans sa seconde section (14) adjacente à la dite seconde extrémité (13) et un milieu de trempe est introduit à travers une buse (20) dans ladite double enveloppe.
